(19) **Europäisches Patentamt / European Patent Office / Office européen des brevets**

(11) **EP 1 980 655 A1**

(12) **EUROPEAN PATENT APPLICATION**
published in accordance with Art. 158(3) EPC

(43) Date of publication:
**15.10.2008 Bulletin 2008/42**

(51) Int Cl.:
**D01F 9/127** (2006.01)    **B01J 23/755** (2006.01)
**C01B 31/02** (2006.01)

(21) Application number: **07707360.9**

(22) Date of filing: **18.01.2007**

(86) International application number:
**PCT/JP2007/051113**

(87) International publication number:
**WO 2007/083831 (26.07.2007 Gazette 2007/30)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.01.2006 JP 2006012726**

(71) Applicant: **Showa Denko K.K.**
**Tokyo 105-8518 (JP)**

(72) Inventors:
- **YOSHIMURA, Masayuki**
  **Kanagawa 210-0867 (JP)**
- **TSUJI, Katsuyuki**
  **Kanagawa 210-0867 (JP)**
- **AOKI, Takanori**
  **Kanagawa 210-0867 (JP)**

(74) Representative: **Strehl Schübel-Hopf & Partner**
**Maximilianstrasse 54**
**80538 München (DE)**

(54) **PLATELET-TYPE SLIT VAPOR-GROWN CARBON FIBER AND PROCESS FOR PRODUCTION THEREOF**

(57)    A method for producing a platelet type slit-incorporated vapor grown carbon fiber by bringing raw materials into contact with a catalyst in a heating zone, wherein the raw materials contain at least ethylene as a carbon source, and a platelet type slit-incorporated vapor grown carbon fiber obtained by the method are disclosed.

Fig.1

**Description**

TECHNICAL FIELD

The present invention relates to a platelet type slit-incorporated vapor grown carbon fiber, and a method for producing the same.

BACKGROUND ART

It is considered that a carbon fiber obtained by a vapor deposition method (vapor Grown carbon fiber) has various applications. Therefore, a vapor grown carbon fiber has hitherto been studied intensively and there are a many reports on a method for producing the same. It is known that a carbon network structure of such a vapor grown carbon fiber varies comparatively easily by varying the reaction conditions such as carbon source, catalyst species and reaction temperature. That is, when one of these conditions varies, a carbon network structure of the carbon fiber thus produced is often different from that of the carbon fiber produced under original and unvaried conditions.

Typical carbon network structures of carbon fibers are roughly classified into the following two carbon network structures.

(A) A carbon network structure of a carbon fiber having a cylindrical shape which comprises a round graphite layer in which a hollow portion exists inside. This structure can be referred to as a tubular shape.

(B) A carbon network structure of a carbon fiber in which a plurality of carbon network structures are laminated in the direction which is perpendicular to a length (growth) direction of the fiber. This structure can be referred to as a platelet shape, a fishbone shape or a laminated plate shape.

Among these carbon network structures of carbon fibers, the carbon fiber having a structure of laminated carbon networks such as the platelet shape has comparatively large specific surface area, unlike the fiber having the tubular shape. Therefore, it has widely been studied about application of a carbon fiber having such a structure to adsorbents, catalysts for fuel cells and various catalyst carriers.

A platelet type slit-incorporated vapor grown carbon fiber as the prior art is included in the carbon fiber having a structure of laminated carbon networks such as the platelet shape. This platelet type slit-incorporated vapor grown carbon fiber contains regular slit-like pores in the fiber grown direction of the carbon fiber having the platelet shape and has a large specific surface area as compared with the carbon fiber having the platelet shape, which does not contain the slit-like pores. Therefore, it is considered that this platelet type slit-incorporated vapor grown carbon fiber is a carbon material which is advantageous with respect to application to the above-mentioned adsorbents, catalysts for fuel cells and various catalyst carriers.

The platelet type slit-incorporated vapor grown carbon fibers, which have hitherto been reported, are only described in Carbon 42, pp. 635-640 (2004). The Carbon magazine only discloses a production method in which an acetylene/hydrogen mixed gas is brought into contact with a nickel-coated alumina plate catalyst in a heating zone at a reaction temperature of 700°C. In this method, a mixture of a platelet type slit-incorporated vapor grown carbon fiber and a coil-type vapor grown carbon fiber is obtained with the yield of 12 mg/cm$^2$.

In the method for producing a platelet type slit-incorporated vapor grown carbon fiber of the above-cited Carbon magazine, acetylene was used as a carbon source. Acetylene is an explosive substance and is very difficult to handle. Therefore, there was a problem that it was difficult to actually use in industrial production. The vapor grown carbon fiber obtained by the method for producing a platelet type slit-incorporated vapor grown carbon fiber of the Carbon magazine is a mixture of a platelet type slit-incorporated vapor grown carbon fiber and a coil-type vapor grown carbon fiber and therefore there was a problem that the platelet type slit-incorporated vapor grown carbon fiber and a coil-type vapor grown carbon fiber cannot be selectively obtained.

As described above, in the manufacturing process of the vapor grown carbon fiber, the resulting carbon network structure easily varies when the carbon source varies. Therefore, it was substantially very difficult to produce a platelet type slit-incorporated vapor grown carbon fiber having a specific carbon fiber network structure by the method other than the above already known method of the Carbon magazine, that is, a method using a carbon source other than acetylene. Actually, there has never been known an example in which this platelet type slit-incorporated vapor grown carbon fiber was produced, except for the above Carbon magazine.

As another example of the carbon fiber of laminated carbon networks such as the platelet shape, for example, a vapor grown carbon fiber having a helical structure is disclosed in Journal of Catalysis 179, pp. 316-374 (1998). In this report, an iron-nickel powder having a high iron content is used as the catalyst and ethylene is used as the carbon source.

DISCLOSURE OF THE INVENTION

An object of the present invention is to provide a method capable of efficiently producing a platelet type slit-incorporated vapor grown carbon fiber without using acetylene, which is difficult to handle.

The present inventors have intensively studied so as to achieve such an object and found a method of using ethylene as a carbon source contained in raw materials in a method for producing a platelet type slit-incorporated vapor grown carbon fiber by bringing raw materials into contact with a catalyst in a heating zone, and thus the present invention has been completed. That is, according to the method of the present invention, a platelet type slit-incorporated vapor grown carbon fiber can be obtained by using low-risk ethylene without using acetylene, which was difficult to handle in the prior art.

That is, the present invention resides in a carbon fiber and a method for producing the same which are summarized in the following (1) to (16).

(1) A method for producing a platelet type slit-incorporated vapor grown carbon fiber by bringing raw materials into contact with a catalyst in a heating zone, wherein the raw materials contain at least ethylene as a carbon source.
(2) The method according to (1), wherein the catalyst is a supported type catalyst comprising a carrier and a catalyst component supported on the carrier.
(3) The method according to (2), wherein the catalyst component contains at least metallic nickel and/or a nickel compound.
(4) The method according to (3), wherein the nickel compound is selected from the group consisting of nickel nitrate, nickel chloride, nickel bromide, nickel iodide, nickel fluoride, nickel carbonate, nickel acetate and a combination thereof.
(5) The method according to any one of (2) to (4), wherein the carrier contains at least a carbon material.
(6) The method according to (5), wherein the carbon material is carbon black.
(7) The method according to any one of (1) to (6), wherein the amount (% by mass) of the catalyst component supported by the supported type catalyst is represented by the following equation:

$$\text{Supporting amount (\% by mass)} = [(\text{mass of metal in catalyst component})/(\text{mass of metal in catalyst component} + \text{mass of carrier})] \times 100;$$

and
is from 1 to 65% by mass.
(8) The method according to any one of (1) to (7), wherein the raw materials further comprise water.
(9) The method according to any one of (1) to (8), wherein the temperature of the heating zone is from 500°C to 800°C.
(10) The method according to any one of (1) to (9), which produces a platelet type slit-incorporated vapor grown carbon fiber having a fiber diameter of 50 to 1,000 nm.
(11) The method according to any one of (1) to (10), which produces a platelet type slit-incorporated vapor grown carbon fiber having the fiber diameter of from 50 to 1,000 nm is produced, and wherein the catalyst is a supported type catalyst comprising a carrier and a catalyst component supported on the carrier,
the carrier is carbon black, and
the temperature of the heating zone is from 550°C to 650°C.
(12) A platelet type slit-incorporated vapor grown carbon fiber produced by the method according to any one of (1) to (11).
(13) The platelet type slit-incorporated vapor grown carbon fiber produced by the method according to (12), which has a BET surface specific area of 100 $m^2$/g or more.
(14) The platelet type slit-incorporated vapor grown carbon fiber produced by the method according to (12) or (13), which has a fiber diameter of 50 to 1,000 nm.
(15) The platelet type slit-incorporated vapor grown carbon fiber produced by the method according to any one of (12) to (14), wherein an area of holes having a ratio of a major axis length to a fiber diameter of 80% or more accounts for 5 to 50% of an area of the carbon fiber when photographic observation is performed using a transmission electron microscope (TEM).
(16) The platelet type slit-incorporated vapor grown carbon fiber produced by the method according to any one of (12) to (15), wherein a graphitized layer laminated in the direction which is perpendicular to a fiber direction is provided between slits.

According to the present invention, as can be understood from the following detailed description, a platelet type slit-incorporated vapor grown carbon fiber having a specific structure can be efficiently produced by using ethylene, which has high safety and is easy to handle, as a carbon source.

BRIEF DESCRIPTION OF THE DRAWINGS

Fig. 1 is a schematic view showing an example of a horizontal type reaction apparatus for producing a vapor grown carbon fiber.
Fig. 2 is a transmission electron microscope (TEM) micrograph of a platelet type slit-incorporated vapor grown carbon fiber produced in Example 1.

BEST MODE FOR CARRYING OUT THE INVENTION

Subsequently, preferred embodiments of the present invention will be described below with reference to the accompanying drawings.
The method for producing a platelet type slit-incorporated vapor grown carbon fiber of the present invention is a method for producing a platelet type slit-incorporated vapor grown carbon fiber by bringing raw materials into contact with a catalyst in a heating region, in which the raw materials contain at least ethylene as a carbon source.
Elements of the present invention are described in detail below.

(Carbon Source)

The carbon source used in the present invention contains at least ethylene. Examples of other carbon sources include arbitrary compounds having carbon atoms, for example, methane, ethane, propane, butane, cyclohexane, benzene, toluene and xylene. In the carbon source of the present invention, ethylene preferably accounts for 90% or more, more preferably 95% or more, and still more preferably 98% or more, based on the number of carbon atoms in the entire carbon source to be supplied. Most preferably, the carbon source of the present invention is composed only of ethylene. There is no restriction of ethylene as long as it is commercially or industrially available, and ethylene containing a small amount of impurities is preferred.

(Catalyst)

The catalyst used in the method of the present invention may be an arbitrary catalyst which enables production of a platelet type slit-incorporated vapor grown carbon fiber, and is preferably a supported type catalyst comprising a carrier and a catalyst component supported on the carrier. Examples of the catalyst component of the supported type catalyst include metallic nickel and a nickel compound. A nickel compound which is decomposed at a temperature of 500 to 800°C in a heating zone before or during the reaction to easily produce metallic nickel can be used, and the nickel compound is preferably nickel nitrate, nickel chloride, nickel bromide, nickel iodide, nickel fluoride, nickel carbonate, nickel acetate, or a combination thereof.
As the carrier of the supported type catalyst, a metal oxide such as alumina and an arbitrary carrier material such as a carbon material can be used, and especially may contain at least a carbon material and carbon black. The carbon black is preferably normal-grade carbon black which is not surface-treated.
As the method for producing the supported type catalyst, an arbitrary method can be used and a conventionally known method can be used. Therefore, for example, the supported type catalyst can be produced by dipping a carrier in a solution of a catalyst component and drying at a predetermined temperature.
The solution used to support the catalyst component on the carrier may be an aqueous solution, or a mixed solution of the aqueous solution and an organic solvent. As the organic solvent, for example, tetrahydrofuran, methanol and acetone can be used. The amount of the solution to be used herein is preferably the amount to be absorbed by the carrier such as the carbon material. Then, the solution in which the carbon material was dipped can be dried by evaporation or dried under reduced pressure. Thus, a supported type catalyst comprising a carbon material and nickel and nickel compound particles supported on the carbon material can be prepared.
The amount (% by mass) of the catalyst component supported by the supported type catalyst is represented by the following equation (I) and is preferably from 1 to 65% by mass, more preferably from 5 to 50% by mass, and most preferably from 5 to 30% by mass.

```
Equation (I):
     Supporting amount (% by mass) = [(mass of metal in
catalyst component)/(mass of metal in catalyst component
+ mass of carrier)] × 100
```

(Heating Zone)

The temperature of the heating zone is preferably from 500 to 800°C, and more preferably from 550 to 650°C. A temperature of 500°C or lower is not preferred since a fiber-like product is not obtained, while a temperature of 800°C or higher is not preferred since thermal decomposition of ethylene preferentially proceeds.

(Reactor)

There is no restriction on a reactor used in the present invention as long as a predetermined heating temperature is obtained, and vertical and horizontal reactors can be used. Among these reactors, a horizontal tubular furnace is preferred in view of supply of raw materials.

(Method for Supplying Raw Material)

Supply of the raw materials in the method of the present invention can be carried out by any known method such as batch, semi-batch or continuous method and there is no restriction. For example, the raw materials can be continuously supplied to the reactor after preliminarily placing a catalyst in the reactor. Furthermore, the raw materials are preferably supplied in a heating zone after sufficiently mixing the raw materials before a gas reaches the heating zone so as to efficiently produce a carbon fiber.

(Method for Supplying Catalyst)

Supply of the catalyst in the present invention can be carried out by any known method such as batch, semi-batch or continuous method and there is no restriction. For example, the catalyst can be preliminarily placed in the reactor, and also can be continuously supplied. Furthermore, the catalyst containing a platelet type slit-incorporated vapor grown carbon fiber produced continuously can be extracted while continuously supplying the catalyst.

(Carrier Gas)

Raw materials containing at least ethylene as a carbon source in the method of the present invention preferably contain a carrier gas. Examples of the carrier gas include hydrogen, nitrogen, helium, argon, krypton, or a mixed gas thereof. However, a gas containing oxygen molecules such as air (i.e. oxygen $O_2$ in a molecular state) is not suited for use. It is particularly preferred to use a gas containing hydrogen as the carrier gas. The concentration of hydrogen in the raw materials is preferably 1 vol% or more and, for example, 50 vol% hydrogen or a gas prepared by diluted hydrogen with nitrogen can be preferably used.

(Water; $H_2O$)

Raw materials containing at least ethylene as a carbon source in the method of the present invention can contain water ($H_2O$) which is considered to have the effect of suppressing production of a non-fibrous carbide. $H_2O$ can be supplied in the form of a gas. The concentration of $H_2O$ in the raw materials is 1 vol% or less, preferably 600 vol ppm or less, and more preferably 150 vol ppm or less. Supply of $H_2O$ enables suppression of production of the non-fibrous carbide, and thus a platelet type slit-incorporated vapor grown carbon fiber can be efficiently produced.

(Pretreatment of Catalyst)

The catalyst used in the method of the present invention is preferably subjected to a pretreatment such as reduction before producing the platelet type slit-incorporated vapor grown carbon fiber. A method for the pretreatment includes, for example, a method in which a heat treatment is carried out in the presence of a reducing gas containing at least hydrogen. The temperature and time of the pretreatment are preferably a temperature and time which enable decomposition of a nickel compound to be used to produce metallic nickel.

The pretreatment of the catalyst can be carried out by any known method such as batch, semi-batch or continuous method and there is no restriction. For example, the reducing gas can be continuously supplied after preliminarily placing the catalyst in the reactor.

(Reaction Apparatus)

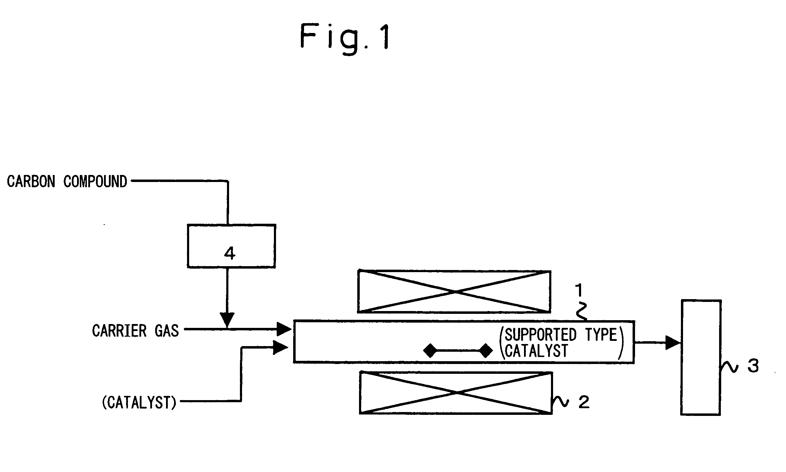

Next, an example of a reaction apparatus in the method for producing a platelet type slit-incorporated vapor grown carbon fiber of the present invention is shown in Fig. 1. Herein, a quartz-made reaction tube 1 serving as a heating zone is equipped with a heater 2 and comprises a supply line for supplying a mixture of raw materials such as a carrier gas and a hydrocarbon gas to a reaction tube opening. This supply line is provided with a vaporizer 4. Using such an apparatus, a heater 2 is raised to a predetermined temperature of 500 to 800°C, and raw materials containing a carbon source (carbon compound) are introduced through the introduction line provided with the vaporizer 4 and then reacted.

EXAMPLES

The following examples further illustrate the present invention. It is to be understood that the present invention is not limited to these examples.

Explanation of Reagents:

Reagents used in the following examples and comparative examples are as follows.

1. Carbon Source
Ethylene: KOATSU GAS KOGYO CO., LTD.
Methane: TAKACHIHO TRADING CO., LTD.
Benzene: Wako Pure Chemical Industries, Ltd.
2. Catalyst Active Component
Nickel(II) nitrate hexahydrate: KANTO CHEMICAL CO., INC.
Iron(III) nitrate nonahydrate: JUNSEI CHEMICAL Co., Ltd.
3. Carbon Black
SHOWBLACK MAF (Nitrogen adsorption specific surface area: 50 m$^2$/g): SHOWA CABOT K.K.
SHOWBLACK N110 (Nitrogen adsorption specific surface area: 144 m$^2$/g): SHOWA CABOT K.K.
SHOWBLACK N762 (Nitrogen adsorption specific surface area: 22 m$^2$/g): SHOWA CABOT K.K.
SHOWBLACK IP600 (Nitrogen adsorption specific surface area: 63 m$^2$/g): SHOWA CABOT K.K.
SHOWBLACK IP200 (Nitrogen adsorption specific surface area: 26 m$^2$/g): SHOWA CABOT K.K.
4. Impregnation Solvent
Tetrahydrofuran: Wako Pure Chemical Industries, Ltd. Water: Ion-exchange water

Example 1

[Preparation of Catalyst]

1.239 g of nickel nitrate (Ni (NO$_3$)$_2$·6H$_2$O) was dissolved in 0.9 g of H$_2$O and then 0.9 g of tetrahydrofuran (THF) was added to obtain a nickel-H$_2$O-THF mixed solution. This mixed solution was added dropwise so as to uniformly coat 1 g of carbon black (SHOWBLACK MAF manufactured by SHOWA CABOT K.K.), followed by a vacuum drying treatment at 100°C for 4 hours. The resulting nickel nitrate supporting carbon black was ground using an agate mortar to obtain a fine-powdered catalyst. The amount (% by mass) of the catalyst component supported by the supported type catalyst represented by the following equation (I) is 20% by mass.

```
Equation (I):
     Supporting amount (% by mass) = [(mass of metal in
catalyst component)/ (mass of metal in catalyst component
+ mass of carrier)] × 100
```

[Synthesis of Carbon Fiber]

In a horizontal furnace equipped with a heating zone 1 (inner diameter: 31 mm, outer diameter: 36 mm, length of heating zone: about 400 mm) of the quartz-made reaction tube shown in Fig. 1, a catalyst was charged in the amount shown in the following table and the temperature of the heating zone 1 was raised to 620°C at a rate of 10°C/min using an $N_2$ gas flow, followed by maintaining at 620°C for 2 hours. After stopping supply of $N_2$, $H_2$ was allowed to flow in the heating zone 1 at a rate of 250 Nml/min for 30 minutes and a reduction treatment of the catalyst was carried out. Then, ethylene at a flow rate of 250 Nml/min was mixed with $H_2$ at a flow rate of 250 Nml/min and a mixed gas was supplied in the reaction tube. The reaction was carried out for one hour. Note, herein, the unit "Nml" indicates the volume (milliliter) at a standard state (at 0°C under 1 atom). The test conditions and results are shown in Table 1.

As a result of the reaction, a black sediment was produced. After cooling, the sediment was recovered and the amount of the sediment produced per mass of the charged catalyst represented by the following equation (II) was determined.

```
Equation (II):
     Production amount (%) = (mass of product)/ (mass of
charged catalyst)
```

As a result, it was 2,087%.

The carbon recovery ratio represented by the following equation (III) was determined.

```
     Carbon recovery ratio (%) = [(mass of product) -
(mass of charged catalyst)]/ (integrated amount of carbon
contained in carbon source supplied during reaction) ×
100
```

As a result, it was 43%.

The outer diameter of the recovered product was examined by observing using a scanning electron microscope (SEM). As a result, it was a fibrous product having an outer diameter of 200 to 700 nm.

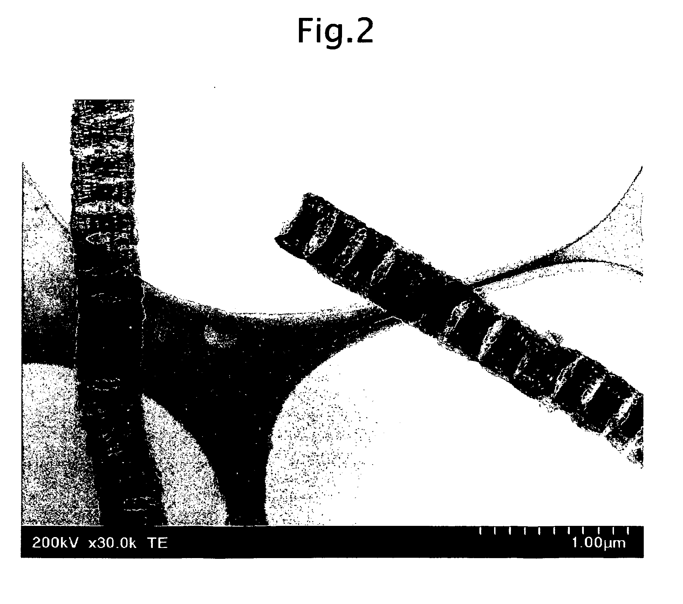

The structure of the product was examined by observing the recovered product using a transmission electron microscope (TEM). As a result, it was a fibrous product in which an area of holes having a ratio of a major axis length to a fiber diameter of 80% or more accounts for 24% of the area of a vapor Grown carbon fiber (see, Fig. 2). That is, it was found that a platelet type slit-incorporated vapor grown carbon fiber (slit fiber) is obtained.

Furthermore, the BET specific surface area, and the pore volume of pores having a pore diameter of 0 to 3,000 Å as measured by a BJH method were determined using a nitrogen adsorption apparatus. As a result, the BET specific surface area was 219 $m^2$/g and the pore volume was 0.363 $cm^3$/g.

Example 2

In the same manner as in Example 1, except that SHOWBLACK N110 was used as carbon black, which is a catalyst carrier, the reaction was carried out. The test conditions and results are shown in Table 1.

Example 3

In the same manner as in Example 1, except that SHOWBLACK N762 was used as carbon black, which is a catalyst carrier, the reaction was carried out. The test conditions and results are shown in Table 1.

Example 4

In the same manner as in Example 1, except that SHOWBLACK IP600 was used as carbon black, which is a catalyst carrier, the reaction was carried out. The test conditions and results are shown in Table 1.

Example 5

In the same manner as in Example 1, except that SHOWBLACK IP200 was used as carbon black, which is a catalyst carrier, the reaction was carried out. The test conditions and results are shown in Table 1.

Example 6

In the same manner as in Example 1, except that the supported amount of nickel calculated in accordance with the above equation (I) was adjusted to 1% by mass, the reaction was carried out. The test conditions and results are shown in Table 1.

Example 7

In the same manner as in Example 1, except that the supported amount of nickel calculated in accordance with the above equation (I) was adjusted to 5% by mass, the reaction was carried out. The test conditions and results are shown in Table 1.

Example 8

In the same manner as in Example 1, except that the supported amount of nickel calculated in accordance with the above equation (I) was adjusted to 10% by mass, the reaction was carried out. The test conditions and results are shown in Table 1.

Example 9

In the same manner as in Example 1, except that the supported amount of nickel calculated in accordance with the above equation (I) was adjusted to 50% by mass, the reaction was carried out. The test conditions and results are shown in Table 1.

Example 10

In the same manner as in Example 1, except that the temperature of the heating zone was adjusted to 650°C, the reaction was carried out. The test conditions and results are shown in Table 1.

Example 11

In the same manner as in Example 1, except that $H_2O$ was added as a reaction additive in amount of 100 ppm based on the entire gas flow rate from a step of reducing the catalyst with $H_2$ to a reaction step, and 8 ml/min of $N_2$ was added as a carrier gas of $H_2O$, the reaction was carried out. The test conditions and results are shown in Table 1.

Example 12

In the same manner as in Example 1, except that $H_2O$ was added as a reaction additive in the amount of 500 ppm based on the entire gas flow rate from a step of reducing the catalyst with $H_2$ to a reaction step, and 40 ml/min of $N_2$ was added as a carrier gas of $H_2O$, the reaction was carried out. The test conditions and results are shown in Table 1.

Example 13

In the same manner as in Example 1, except that the supported amount of nickel calculated in accordance with the above equation (I) was adjusted to 10% by mass, $H_2O$ was added as a reaction additive in the amount of 100 ppm based on the entire gas flow rate from a step of reducing the catalyst with $H_2$ to a reaction step, and 8 ml/min of $N_2$ was added as a carrier gas of $H_2O$, the reaction was carried out. The test conditions and results are shown in Table 1.

Example 14

In the same manner as in Example 1, except that the ratio of the gas flow rate (vol%) of ethylene to $H_2$ was adjusted to 20:80, the reaction was carried out. The test conditions and results are shown in Table 1.

Example 15

In the same manner as in Example 1, except that the ratio of the gas flow rate (vol%) of ethylene to $H_2$ was adjusted to 80:20, the reaction was carried out. The test conditions and results are shown in Table 1.

Example 16

In the same manner as in Example 1, except that the ratio of the gas flow rate (vol%) of ethylene to $H_2$ was adjusted to 100:0, the reaction was carried out. The test conditions and results are shown in Table 1.

Comparative Example 1

In the same manner as in Example 1, except that methane was used as the carbon source, the reaction was carried out. The test conditions and results are shown in Table 1. Herein, the powdered product was observed by a scanning electron microscope. As a result, a fibrous product was scarcely observed.

Comparative Example 2

In the same manner as in Example 1, except that methane was used as the carbon source and the heating zone temperature was adjusted to 800°C, the reaction was carried out. The test conditions and results are shown in Table 1. Herein, the powdered product was observed by a scanning electron microscope. As a result, a fibrous product was scarcely observed.

Comparative Example 3

In the same manner as in Example 1, except that methane was used as the carbon source and the heating zone temperature was adjusted to 1,000°C, the reaction was carried out. The test conditions and results are shown in Table 1. Herein, the powdered product was observed by a scanning electron microscope. As a result, a fibrous product was scarcely observed.

Comparative Example 4

In the same manner as in Example 1, except that benzene was used as the carbon source and the heating zone temperature was adjusted to 800°C, the reaction was carried out. The test conditions and results are shown in Table 1. Herein, the powdered product was observed by a scanning electron microscope. As a result, a fibrous product was scarcely observed.

Comparative Example 5

In the same manner as in Example 1, except that benzene was used as the carbon source and the heating zone temperature was adjusted to 1,000°C, the reaction was carried out. The test conditions and results are shown in Table 1. Herein, the powdered product was observed by a scanning electron microscope. As a result, a fibrous product was scarcely observed.

Table 1

| | Conditions changed compared Example to 1 | | Charge amount of catalyst (mg) | Product | | | | | | | |
|---|---|---|---|---|---|---|---|---|---|---|---|
| | | | | Production amount (%) | Fiber selection rate (%) | Shape of main component (SEM) | Shape of main component (TEM) | Fiber diameter (nm) | BET specific surface area $(m^2/g)$ | Pore volume $(cm^2/g)$ |
| Example 1 | - | | 86.2 | 2,087 | B | Thick fiber | Slit fiber | 200-700 | 219 | 0.363 |
| Example 2 | Carbon black species | N110 | 86.2 | 2,011 | B | Thick fiber | Slit fiber | 200-600 | | |
| Example 3 | | N762 | 86.2 | 1,789 | B | Thick fiber | Slit fiber | 190-640 | | |
| Example 4 | | IP600 | 86.2 | 2,282 | B | Thick fiber | Slit fiber | 290-800 | | |
| Example 5 | | IP200 | 86.2 | 1,736 | B | Thick fiber | Slit fiber | 350-700 | | |
| Example 6 | Supporting amount of catalytic metal | 1% by mass | 40.4 | 282 | C | Non-fibrous carbide + thick fiber | Slit fiber | - | | |
| Example 7 | | 5% by mass | 48.5 | 985 | B | Thick fiber | Slit fiber | | | |
| Example 8 | | 10% by mass | 59.7 | 1,060 | B | Thick fiber | Slit fiber | | | |
| Example 9 | | 50% by mass | 229 | 1,846 | C | Non-fibrous carbide + thick fiber | Slit fiber | 500-1000 | | |
| Example 10 | Heating zone temperature | 650°C | 86.2 | 1,493 | C | Non-fibrous carbide + thick fiber | Slit fiber | 150-450 | | |
| Example 11 | Additive ($H_2O$), Supporting amount of catalytic metal | Yes (100 ppm), no change | 86.2 | 2,271 | A | Thick fiber | Slit fiber | 400-1000 | 393 | 0.588 |
| Example 12 | | Yes (500 ppm), no change | 86.2 | 2,124 | C | Thick fiber | Slit fiber | | | |
| Example 13 | | Yes (100 ppm), 10% by mass | 59.7 | 2,185 | A | Thick fiber | Slit fiber | 100-550 | | |

(continued)

| | | | 86.2 | | | | | | | |
|---|---|---|---|---|---|---|---|---|---|---|
| Example 14 | Ratio ethylene/H$_2$ | 20/80 | 86.2 | 1,089 | B | Thick fiber | Slit fiber | | | |
| Example 15 | | 80/20 | 86.2 | 1,832 | B | Thick fiber | Slit fiber | | | |
| Example 16 | | 100/0 | 86.2 | 1,299 | C | Thick fiber | Slit fiber | | | |
| Comparative Example 1 | Carbon source, Heating zone temperature | Methane, no change | 86.2 | 57 | D | Coke | - | - | | |
| Comparative Example 2 | | Methane, 800°C | 86.2 | 102 | D | Coke | - | - | | |
| Comparative Example 3 | | Methane, 1,000°C | 86.2 | 74 | D | Coke | - | - | | |
| Comparative Example 4 | | Benzene, 800°C | 86.2 | 241 | D | Coke | - | - | | |
| Comparative Example 5 | | Benzene, 1,000°C | 86.2 | 193 | D | Coke | - | - | | |
| A: excellent, B: good, C: fair, D: no good | | | | | | | | | | |

For comparison, test conditions of Example 1 are as schematically shown below.
Carbon black: SHOWBLACK MAF
Supported amount of catalyst metal: 20% by mass
Heating zone temperature: 620°C
Additives ($H_2O$) : None
Ratio ethylene/$H_2$ : 50/50
Carbon source: Ethylene

**Claims**

1. A method for producing a platelet type slit-incorporated vapor grown carbon fiber by bringing raw materials into contact with a catalyst in a heating zone, wherein the raw materials contain at least ethylene as a carbon source.

2. The method according to claim 1, wherein the catalyst is a supported type catalyst comprising a carrier and a catalyst component supported on the carrier.

3. The method according to claim 2, wherein the catalyst component contains at least metallic nickel and/or a nickel compound.

4. The method according to claim 3, wherein the nickel compound is selected from the group consisting of nickel nitrate, nickel chloride, nickel bromide, nickel iodide, nickel fluoride, nickel carbonate, nickel acetate and a combination thereof.

5. The method according to any one of claims 2 to 4, wherein the carrier contains at least a carbon material.

6. The method according to claim 5, wherein the carbon material is carbon black.

7. The method according to any one of claims 1 to 6, wherein the amount (% by mass) of the catalyst component supported by the supported type catalyst is represented by the following equation:

$$\text{Supporting amount (\% by mass)} = [(\text{mass of metal in catalyst component})/(\text{mass of metal in catalyst component} + \text{mass of carrier})] \times 100;$$

and
is from 1 to 65% by mass.

8. The method according to any one of claims 1 to 7, wherein the raw materials further comprise water.

9. The method according to any one of claims 1 to 8, wherein the temperature of the heating zone is from 500°C to 800°C.

10. The method according to any one of claims 1 to 9, wherein a platelet type slit-incorporated vapor grown carbon fiber having a fiber diameter of 50 to 1,000 nm is produced.

11. The method according to any one of claims 1 to 10, wherein a platelet type slit-incorporated vapor grown carbon fiber having the fiber diameter of from 50 to 1,000 nm is produced, and
wherein the catalyst is a supported type catalyst comprising a carrier and a catalyst component supported on the carrier,
the carrier is carbon black, and
the temperature of the heating zone is from 550°C to 650°C.

12. A platelet type slit-incorporated vapor grown carbon fiber produced by the method according to any one of claims 1 to 11.

13. The platelet type slit-incorporated vapor grown carbon fiber produced by the method according to claim 12, which has a BET surface specific area of 100 m$^2$/g or more.

14. The platelet type slit-incorporated vapor grown carbon fiber produced by the method according to claim 12 or 13, which has a fiber diameter of 50 to 1,000 nm.

15. The platelet type slit-incorporated vapor grown carbon fiber produced by the method according to any one of claims 12 to 14, wherein an area of holes having a ratio of a major axis length to a fiber diameter of 80% or more accounts for 5 to 50% of an area of the carbon fiber when photographic observation is performed using a transmission electron microscope (TEM).

16. The platelet type slit-incorporated vapor grown carbon fiber produced by the method according to any one of claims 12 to 15, wherein a graphitized layer laminated in the direction which is perpendicular to a fiber direction is provided between slits.

Fig.1

EP 1 980 655 A1

# Fig.2

200kV  x30.0k  TE                                    1.00μm

## INTERNATIONAL SEARCH REPORT

| | International application No. |
|---|---|
| | PCT/JP2007/051113 |

A.  CLASSIFICATION OF SUBJECT MATTER
*D01F9/127*(2006.01)i, *B01J23/755*(2006.01)i, *C01B31/02*(2006.01)i

According to International Patent Classification (IPC) or to both national classification and IPC

B.  FIELDS SEARCHED

Minimum documentation searched (classification system followed by classification symbols)
D01F9/127, B01J23/755, C01B31/02

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
JST7580(JDream2), JSTPlus(JDream2)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2003-200052 A  (Toshiba Corp.),<br>15 July, 2003 (15.07.03),<br>Claims; description, Par. Nos. [0069], [0089],<br>[0092] to [0094], [0284] to [0285]<br>& JP 2006-228745 A        & US 2002-177032 A1 | 1,8-10,12-16<br>2-7,11 |
| Y<br>A | JP 3-56596 B2  (Denki Kagaku Kogyo Kabushiki<br>Kaisha),<br>28 August, 1991 (28.08.91),<br>Full text<br>(Family: none) | 2-7,11<br>1,8-10,12-16 |
| Y | JP 7-51568 A  (Asahi Carbon Kabushiki Kaisha),<br>28 February, 1995 (28.02.95),<br>Full text<br>(Family: none) | 2-7,11 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 March, 2007 (15.03.07) | Date of mailing of the international search report<br>27 March, 2007 (27.03.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| | International application No. |
|---|---|
| | PCT/JP2007/051113 |

C (Continuation). DOCUMENTS CONSIDERED TO BE RELEVANT

| Category* | Citation of document, with indication, where appropriate, of the relevant passages | Relevant to claim No. |
|---|---|---|
| A | Guo-Bin Zheng, A model for the structure and grouth of carbon nanofibers synthesized by the CVD method using nickel as a catalyst, Carbon, 42, 2004, 635-640 | 1-16 |
| A | JP 2003-147642 A (Morinobu ENDO), 21 May, 2003 (21.05.03), Full text & US 2003-26982 A1 & EP 1243678 A2 & CN 1388277 A | 1-16 |
| A | JP 2004-3097 A (Showa Denko Kabushiki Kaisha), 08 January, 2004 (08.01.04), Full text & JP 3461805 B & US 6489026 B1 & US 2003-49443 A1 & EP 1191131 A1 & WO 00/58536 A1 & CN 1343269 A & TW 524904 B | 1-16 |
| A | WO 95/07551 A1 (HYPERION CATALYSIS INTERNATIONAL, INC.), 16 March, 1995 (16.03.95), Full text & JP 9-502566 A & JP 7-85860 A & JP 2005-38851 A & US 5879836 A1 & EP 786154 A & AU 7724694 A & AU 684310 B & CA 2171478 A | 1-16 |

Form PCT/ISA/210 (continuation of second sheet) (April 2005)

**INTERNATIONAL SEARCH REPORT**

International application No.

PCT/JP2007/051113

The "slit vapor-grown carbon fiber" set forth in claim is considered to be one which can be produced only under specific conditions and which is not always common general technical knowledge to a person skilled in the art. However, the concept of "slit vapor-grown carbon fiber" is not fully specified in claim, so that the invention is unclear. Further, the description does not clearly or fully disclose what conditions the "slit vapor-grown carbon fiber" can be produced under.

This international search report gives the result of a search made on the assumption that the "slit vapor-grown carbon fiber" can be formed under the conditions which a person skilled in the art can select on the basis of common general technical knowledge.

Form PCT/ISA/210 (extra sheet) (April 2005)

**EP 1 980 655 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Carbon,* 2004, vol. 42, 635-640

- *Journal of Catalysis,* 1998, vol. 179, 316-374